# EUROPEAN PATENT SPECIFICATION

(11) **EP 1 154 169 B1**
(45) Date of publication and mention of the grant of the patent: **02.05.2003**
(21) Application number: 01401151.4
(22) Date of filing: 03.05.2001
(51) Int. Cl.: F16B 21/04

(54) **Connector assembly with a lock of the bayonet type**
Elektrische Steckeranordnung mit einer Bajonettverschlussverbindung
Connecteur électrique verrouillé par une fixation à bayonnette

(30) Priority: 04.05.2000 FR 0005748
(43) Date of publication of application: 14.11.2001
(73) Proprietor: FCI, 75009 Paris (FR)
(72) Inventor: Boiret, Gérard, 72530 Yvre l'Eveque (FR); Bourgeois, Olivier, 72230 Monce en Belin (FR)
(74) Representative: Schmit, Christian Norbert Marie

(56) References cited:
- FR-A- 2 656 050
- US-A- 4 464 001
- US-A- 5 397 196

## Description

The present invention has for object a connector assembly with a lock of the bayonet type. It is applied more specially in the field of the connection assemblies comprising at least a base and a complementary pin, the pin being mounted in the base and being held on the base by means of a locking ring co-operating with a locking lug on the base. The interest of the invention is to propose a connector assembly the locking of which is guaranteed even when the connector assembly is placed in difficult mechanical conditions.

From document FR-A-2,656,050, a rotatable locking system is known. A connector assembly with a lock of the bayonet type according to the preamble of claim 1 is known from the state of the art, particularly from the teachings of the document US 5 397 196. A connector assembly according to this document consists of a base having locking lugs, and a pin comprising a pin body and a locking ring. The locking ring has ramps, each ramp being able to cooperate with one lug. A movement of one lug in a ramp is generally limited by an end stop on the ramp.

A ramp of the locking ring is characterized by a width. Adjacent a zone for inserting the lug in the ramp, the width of the ramp is larger than a diameter of the lug. Toward an end of the ramp located close to the end stop, the width of the ramp is progressively reduced below the diameter of the lug. Nevertheless, the movement of the lug can be completed at the end stop because the width of the ramp can be increased elastically adjacent the end of the ramp.

Namely, adjacent the end which is close to the end stop, the ramp comprises an elastic beam. The elastic beam is positioned transversally in relation to the ramp in order to decrease the width thereof. But the elastic beam can be pushed in a recess of the ring, in order to provide a ramp with a width allowing the passage of the lug toward the end stop. For instance, the beam is pushed by the lug itself when the lug is locked on the ramp of the ring.

Therefore, when an user displaces the lug on the ramp, preferably during a rotation of the ring in relation to the base on which the lug is located, a resistance to the rotation is felt by the user. The lug is forced against the elastic beam in order to push the elastic beam in its recess and thus to allow the passage of the lug toward the end stop. Moreover, when the lug reaches the end stop, the elastic beam returns in an unstressed rest position, in which a free end of the elastic beam comprises a cutout to keep the lug in its position against the end stop.

In a preferred example, the lug has a cylindrical shape. Preferably, the cutout at the free end of the beam is then shaped as an arc of a circle matching a portion of an outer periphery of the lug. Preferably, the elastic beam is shaped as a prolonged parallelepiped, such that the first end having the cutout is presented opposite a second end, such second end being embedded for instance in the locking ring.

The elastic beam comprises a step between an upper sliding surface of the beam and the cutout. The sliding surface is a surface of the elastic beam on which the lug is forced when it is moved toward the end stop. The step allows to guarantee the retention of the lug against the end stop. The force necessary to unlock the connector assembly becomes higher with a steeper ramp. Namely, in order to unlock the connector assembly, a sufficient rotation force has to be exerted so that the lug is moved out of the cutout and moves the cutout of the ramp toward a displaced position.

Since the known connector assembly is designed to be manipulated by band, the force which has to be applied to allow the lug to be moved from its position against the end stop is moderate. The step generally has an obtuse shape. Therefore, since the necessary unlocking force is smaller, when the connector assembly is exposed to strong vibrations, these vibrations can play the role of an unlocking force and move the lug from its position against the end stop.

The connection assemblies with a lock of the bayonet type of the state of the art create an inconvenience when they are placed in difficult mechanical conditions. Thus, for instance, in strong vibratory conditions, the connection assemblies may unlock by themselves. There is a risk of disconnection of the base and the pin.

An object of the invention is to remedy such inconvenience by means of the provision of a connector assembly with a lock comprising a wedge to maintain the position of the elastic beam against the lug when the lug is located against the end stop. The wedge prevents the lug to be moved from its position against the end stop whatever be the force applied on the unlocking ring and whatever be the mechanical and notably vibratory conditions in which the connector assembly is placed. When the lug is unlocked, the elastic beam is pushed in a recess. To facilitate the positioning of the wedge, the locking ring according to the invention comprises an opening able to be accessed from an outer surface.

The elastic beam defines in the opening an upper slot and a lower slot. The upper slot is able to receive the lug until it reaches its position against the end stop, and the lower slot corresponds to the space between the beam and the recess in which the beam is able to be forced. The wedge is arranged preferably in the lower slot so that the elastic beam cannot be forced further and to prevent a movement of the lug thus lying completely in the upper slot. The wedge can be a pin with a handle which is pushed in forcibly in order to prevent the movement of the elastic beam after the locking. The pin must be withdrawn to allow the connector assembly to be unlocked.

The invention as defined in claim 1 is a connector assembly comprising a base and a pin, the base comprising at least one locking lug; and the pin comprising a pin body and a locking ring, the ring comprising at least one ramp to receive the lug, the ramp being hindered by an elastic element, the elastic element defining in the ramp an upper slot in which the lug can move, and a lower slot toward which the elastic element can be pushed, characterized in that it comprises a removable locking member that can be arranged in the lower slot to block the displacement of the elastic element.

Further features of the invention are disclosed in the dependent claims.

The invention will be better understood when reading the following description with reference to the attached figures. These figures are merely illustrative and should not be considered as restricting the invention in any way. Among the figures:
- Figure 1: shows a schematic view of a connector assembly locked according to the invention;
- Figure 2: shows an enlarged portion of a connector assembly according to the invention;
- Figure 3: shows a locking member of assembly according to the invention.

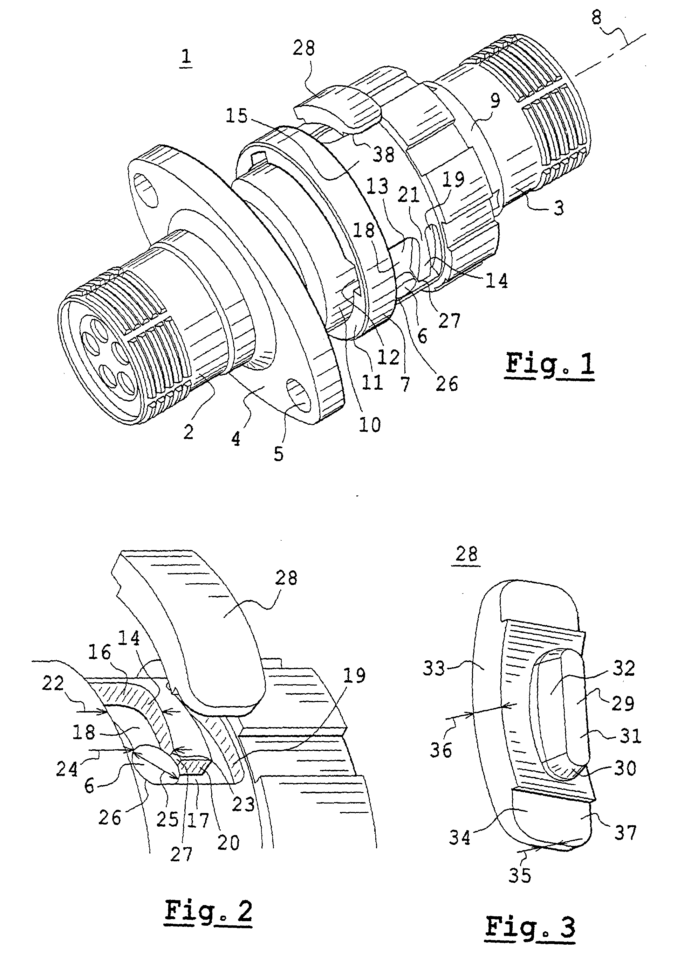

Figure 1 shows a connector assembly I according to the invention. The connector assembly I comprises a base 2 and a pin 3. The pin 3 is complementary to the base 2. The base 2 and the pin 3 are designed preferably to receive cables. Moreover, the base 2 can be mounted rigidly on a support by means of a flange 4. To this end, the flange 4 has openings 5 allowing it to be for instance screwed in the support.

The base 2 comprises a locking lug 6. The pin 3 comprises a locking ring 7 to cooperate with the lug 6. The ring 7 can slide longitudinally along the connector assembly I along an axis 8. Otherwise, the ring 7 is able to rotate freely about a pin body 9 of the pin 3.

The lug 6 extends beyond an outer periphery 10 of the base 2. Preferably, the outer periphery 10 has a cylindrical shape. In a preferred example, the lug 6 is cylindrical and comprises an axis of revolution oriented radially in relation to the outer periphery 10.

The ring 7 comprises a front face 11. The front face 11 is perpendicular to the axis 8. The front face 11 comprises an inlet 12. The inlet 12 corresponds to an internal cutout of the locking ring 7, so that the lug 6 can pass in the direction of a ramp 13 on the locking ring 7. Namely, when the locking ring 7 is longitudinally transferred along the axis a toward the flange 4, the locking ring 7 is previously rotated in order to position the opening 12 opposite the lug 6.

The transfer of the locking ring 7 is limited by an element 14 positioned perpendicularly to the axis of transfer, and preferably positioned in an extension of an outer surface 15 of the ring 7. However, the outer surface 15 has preferably a cylindrical form, and therefore the element 14 is also contained in the cylindrical profile. Preferably, the element 14 corresponds to a cutout in the outer surface 15. To limit the transfer of the locking ring 7 when the opening 12 is positioned opposite the lug 6, the lug 6 abuts an edge 16 of the element 14, whereby the edge 16 can be aligned with the opening 12.

The element 14 is, for instance, a beam which is fitted in the outer surface 15, preferably adjacent the edge 16. The outer surface 15 comprises an opening 17 in which the element 14 extends, so that the element 14 defines an upper slot 18 and a lower slot I9 in the opening 17. The upper slot 18 is in communication with the inlet 12.

The element 14 comprises a free end 20, the free end 20 being located opposite a fixed end 21 of the element/beam 14, the fixed end 21 corresponding to the attachment point of the beam 14, for instance adjacent the edge 16. The free end 20 can be slightly mobile inside the opening 17. When the element 14 is displaced inside the opening 17, the dimensions of the slots 18 and 19 are each modified.

Adjacent the edge 16, the upper slot 18 has a width 22. Adjacent a step 23 of the free end 20, the upper slot 18 has a width 24. The width 24 is variable according to the position of the free end 20 inside the opening 17. The width 22 is larger than a diameter 25 of the lug 6. On the other hand, in a rest position of the elastic element 14, the width 24 is smaller than the diameter 25 when the lug 6 is displaced in the upper slot 18. The elastic element 14 can be displaced in the opening 17 so that the width 24 becomes equal to the diameter 25.

When the lug 6 passes beyond the step 23 while pushing the beam 14 in a flexible manner toward the lower slot 19, the lug 6 abuts an edge 26, the edge 26 being diametrically opposed to the edge 16. When the lug 6 is received against the edge 26, a cutout 27 of the free end 20 rests on a periphery of the lug 6. In this position, the elastic element 14 is at rest. A distance between the edge 26 and the cutout 27 is then equal to the diameter 25. In this position, the width 24 is smaller than the diameter 25. Therefore, in this position, the lug 6 is held by a constriction formed by the step 23.

The connector assembly 1 according to the invention comprises a locking member 28, showed in figure 3, such that the locking member 28 can be inserted in the lower slot 19 in order to prevent the displacement of the elastic element 14 in the lower slot 19 and also to prevent the width 24 to be increased in order to allow the lug 6 to pass when the lug is blocked between the cutout 27 and the edge 26.

The locking member 28 is mounted preferably on the ring 7 from the outer surface 15 The locking member 28 comprises a step 29. In a preferred example, the step 29 is dimensioned so as to match the shape of the lower slot 19 when the elastic beam 14 is at rest. Then, the step 29 has a parallelepipedal shape. Besides, since the step 29 is designed to be forcibly inserted in the lower slot 19, the step 29 comprises preferably a bevel 30, such that the bevel 30 forms a large angle in order to facilitate the insertion of the step 29 in the lower slot 19. Namely, an insertion face 31 of the step 29 is dimensioned distinctly smaller than the shape of the lower slot 19, whereas an upper periphery 32 of the step is dimensioned slightly larger than the shape of the lower slot 19.

Moreover, the locking member 28 comprises an upper plate 33. The upper plate 33 has a dimension which is larger than dimension of the lower slot 19. Thus, when the step 29 is inserted in the lower slot 19, the locking member 28 still has the outer plate 33 extending from the outer periphery 15 of the ring 7. The outer plate 33 is designed to facilitate the installation and/or the disassembly of the locking member 28. Particularly when considering the large size of the outer plate 33, the locking member 28 is easy to manipulate.

Moreover, the upper plate 33 has prehension means. Namely, the upper plate 33 comprises a small wing 34, the small wing 34 having such a thickness 35 that the thickness 35 is smaller than a thickness 36 of a region of the upper plate 33 located adjacent the step 29. The small wing 34 has a face 37 facing the outer surface 15 of the ring 7 when the locking member 28 is mounted in the lower slot 19. Thus mounted, the locking member 28 has a space 38 between the face 37 of the small wing 34 and the outer face 15 of the ring 7.

For instance, a screwdriver can be inserted in this space 38 to act as a lever and so to dislodge the locking member 28 from its position in the lower slot 19. When the locking member 28 is withdrawn, the mobility of the elastic element 14 is returned, and so, when the ring 7 is rotated about the axis 8, the lug 6 can be unlocked from its position between the edge 26 and the cutout 27 while clearing the constriction adjacent the step 23 and pushing the elastic element 14 toward the lower slot 19.

In a preferred embodiment of the invention, the base 2 comprises three lugs like lug 6 and in correspondence, the ring 7 of the pin 3 comprises three ramps like ramp 13, with the lugs and respectively the ramps being arranged at 120 degrees from each other. In such an embodiment, it can be foreseen that only one locking member 28 will be necessary to lock the connector base 1. Nevertheless, the connector base 1 may require the use of three locking members 28.

## Claims

1. A connector assembly (1) comprising a base (2) and a pin (3), the base comprising at least one locking lug (6) and the pin comprising a pin body (9) and a locking ring (7), the ring comprising at least one ramp (13) to receive the lug (6), the ramp (13) being hindered by an elastic element (14), the elastic element (14) defining in the ramp an upper slot (18) in which the lug can move, and a lower slot (19) toward which the elastic element can be pushed, **characterized in that** it (1) comprises a removable locking member (28) that can be arranged in the lower slot to block the displacement of the elastic element

2. A connector assembly as set forth in claim 1, **characterized in that** the lower slot is able to be accessed from an outer surface (15) of the ring.

3. A connector assembly as set forth in claim **characterized in that** the locking member is mounted in the lower slot (19) from the outer surface of the ring (7).

4. A connector assembly as set forth in any of claims 1 to 3, **characterized in that** the locking member comprises a step (29) with a bevel (30), the bevelled step being designed to be forcibly pushed by means of a handle in the lower slot (19).

5. A connector assembly as set forth in any of claims 1 to 4, **characterized in that** the locking member (28) comprises an upper plate (33) having a dimension larger than the lower slot, and designed to facilitate the installation or the disassembly of the locking member.

6. A connector assembly as set forth in claim 5, **characterized in that** the upper plate comprises at least one small wing (34), such that a space (38) is defined between the small wing and an outer surface of the ring.

7. A connector assembly as set forth in one of claims 1 to 6, **characterized in that** the ring (7) comprises an inlet (12) to allow the passage of the lug (6) in the direction of the ramp (13).

8. A connector assembly as set forth in any of claims 1 to 7, **characterized in that** the elastic element is a flexible tab, the flexible tab comprising a free end (20) to prevent a displacement of the lug toward the lower slot.

9. A connector assembly as set forth in claim 8, **characterized in that** the free end comprises a complementary cutout (27) to receive the lug (6).

10. A connector assembly as set forth in any of claims 1 to 9, **characterized in that** the elastic element comprises a step (23) forming a neck.

11. A connector assembly as set forth in any of claims 1 to 10, **characterized in that** a width (24) of the upper slot is smaller than a diameter (25) of the lug.

12. A connector assembly as set forth in any of claims 1 to 11, **characterized in that** the base comprises three lugs and the ring comprises three ramps arranged at l20° from each other respectively.

## Patentansprüche

1. Verbinderanordnung (1) mit einem Sockel (2) und einem Stift (3), wobei der Sockel mindestens eine Verriegelungsnase (6) und der Stift einen Stiftkörper (9) und einen Verriegelungsring (7) aufweist, wobei der Ring mindestens eine Rampe (13) zur Aufnahme der Nase (6) aufweist, wobei die Rampe (13) von einem elastischen Element (14) blockiert wird, wobei das elastische Element (14) in der Rampe einen oberen Schlitz (18), in dem die Nase sich bewegen kann, und einen unteren Schlitz (19) definiert, zu dem das elastische Element gedrückt werden kann, **dadurch gekennzeichnet, dass** sie (1) ein entfernbares Verriegelungsglied (28) aufweist, das im unteren Schlitz angeordnet werden kann, um die Verschiebung des elastischen Elements abzublocken.

2. Verbinderanordnung nach Anspruch 1, **dadurch gekennzeichnet, dass** der untere Schlitz von einer Außenfläche (15) des Rings zugänglich ist.

3. Verbinderanordnung nach Anspruch 1, **dadurch gekennzeichnet, dass** das Verriegelungsglied von der Außenseite des Rings (7) in den unteren Schlitz (19) eingesetzt wird.

4. Verbinderanordnung nach einem der Ansprüche 1 bis 3, **dadurch gekennzeichnet, dass** das Verriegelungsglied einen Absatz (29) mit einer Schrägkante (30) aufweist, wobei der abgeschrägte Absatz so ausgebildet ist, dass er mit Hilfe eines Griffs mit Gewalt in den unteren Schlitz (19) gedrückt werden kann.

5. Verbinderanordnung nach einem der Ansprüche 1 bis 4, **dadurch gekennzeichnet, dass** das Verriegelungsglied (28) eine obere Platte (33) mit einer größeren Abmessung als der untere Schlitz aufweist, die so gestaltet ist, dass sie den Einbau oder den Ausbau des Verriegelungsglieds erleichtert.

6. Verbinderanordnung nach Anspruch 5, **dadurch gekennzeichnet, dass** die obere Platte mindestens einen kleinen Flügel (34) aufweist, so dass ein Raum (38) zwischen dem kleinen Flügel und einer Außenfläche des Rings definiert wird.

7. Verbinderanordnung nach einem der Ansprüche 1 bis 6, **dadurch gekennzeichnet, dass** der Ring (7) eine Einlassöffnung (12) aufweist, um den Durchgang der Nase (6) in Richtung der Rampe (13) zu erlauben.

8. Verbinderanordnung nach einem der Ansprüche 1 bis 7, **dadurch gekennzeichnet, dass** das elastische Element ein biegsamer Lappen ist, wobei der biegsame Lappen ein freies Ende (20) aufweist, um eine Verschiebung der Nase zum unteren Schlitz zu verhindern.

9. Verbinderanordnung nach Anspruch 8, **dadurch gekennzeichnet, dass** das freie Ende einen komplementären Ausschnitt (27) zur Aufnahme der Nase (6) aufweist.

10. Verbinderanordnung nach einem der Ansprüche 1 bis 9, **dadurch gekennzeichnet, dass** das elastische Element einen Absatz (23) aufweist, der einen Kragen bildet.

11. Verbinderanordnung nach einem der Ansprüche 1 bis 10, **dadurch gekennzeichnet, dass** eine Breite (24) des oberen Schlitzes kleiner ist als ein Durchmesser (25) der Nase.

12. Verbinderanordnung nach einem der Ansprüche 1 bis 11, **dadurch gekennzeichnet, dass** der Sockel drei Nasen und der Ring drei Rampen aufweist, die einen Abstand von jeweils 120° voneinander aufweisen.

## Revendications

1. Ensemble de connexion (1) comportant une embase (2) et une fiche (3), l'embase comportant au moins un ergot de verrouillage (6), et la fiche comportant un corps de fiche (9) et une bague de verrouillage (7), la bague comportant au moins une rampe (13) pour recevoir l'ergot, la rampe étant entravée par un élément élastique (14), l'élément élastique délimitant dans cette rampe une fente supérieure (18) dans laquelle l'ergot est mobile, et une fente inférieure (19) vers laquelle l'élément élastique peut être poussé, **caractérisé en ce qu'**il comporte un verrouilleur (28) amovible, le verrouilleur pouvant être disposé dans la fente inférieure pour bloquer le déplacement de l'élément élastique.

2. Ensemble de connexion selon la revendication 1 **caractérisé en ce que** la fente inférieure est accessible depuis une surface extérieure (15) de la bague.

3. Ensemble de connexion selon la revendication 2 **caractérisé en ce que** le verrouilleur est monté dans la fente inférieure depuis la surface extérieure de la bague.

4. Ensemble de connexion selon l'une quelconque des revendications 1 à 3 **caractérisé en ce que** le verrouilleur comporte un décrochement (29) chanfreiné (30), le décrochement chanfreiné étant destiné à être emmanché à force dans la fente inférieure.

5. Ensemble de connexion selon l'une quelconque des revendications 1 à 4 **caractérisé en ce que** le verrouilleur comporte une plaque supérieure (33) d'une dimension supérieure à la fente inférieure, et destinée à faciliter le montage ou le démontage du verrouilleur.

6. Ensemble de connexion selon la revendication 5 **caractérisé en ce que** la plaque supérieure comporte au moins une ailette (34), telle qu'un espace (38) est défini entre l'ailette et une surface extérieure de la bague.

7. Ensemble de connexion selon l'une des revendications 1 à 6 **caractérisé en ce que** la bague (7) comprends une entrée (12) pour permettre le passage de l'ergot (6) dans la direction de la rampe (13).

8. Ensemble de connexion selon l'une quelconque des revendications 1 à 7 **caractérisé en ce que** l'élément élastique est une languette flexible, la languette flexible comportant une extrémité libre (20) pour empêcher un déplacement de l'ergot vers la fente inférieure.

9. Ensemble de connexion selon la revendication 8 **caractérisé en ce que** l'extrémité libre comporte une échancrure (27) complémentaire pour recevoir l'ergot.

10. Ensemble de connexion selon l'une quelconque des revendications 1 à 9 **caractérisé en ce** l'élément élastique comporte un décrochement (23) formant un goulot.

11. Ensemble de connexion selon l'une quelconque des revendications 1 à 10 **caractérisé en ce qu'**une largeur (24) de la fente supérieure est inférieure à un diamètre (25) de l'ergot.

12. Ensemble de connexion selon l'une quelconque des revendications 1 à 11 **caractérisé en ce que** l'embase comporte trois ergots et la bague comporte trois rampes disposées respectivement à 120° les uns des autres.
